# EUROPEAN PATENT APPLICATION

(11) **EP 3 893 372 A1**
(43) Date of publication of application: **13.10.2021**
(21) Application number: 20894913.1
(22) Date of filing: 10.03.2020
(51) Int. Cl.: H02M 3/07

(54) **DC-DC CONVERTER**

(30) Priority: 26.01.2020 CN 202010077274
(71) Applicant: SHANGHAI WEIZIMEI ELECTRONIC TECHNOLOGY CO., LTD, Shanghai 201203 (CN)
(72) Inventor: LIU, Yushan, Shanghai 201210 (CN)
(74) Representative: Bandpay & Greuter
(86) International application number: PCT/CN2020/078510
(87) International publication number: WO 2021/147148

(57) **Abstract**

The present application discloses a DC-DC converter for implementing boosting-bucking conversion. The converter includes a power input circuit, a power output circuit, a control circuit, and a first-phase charge pump conversion branch and a second-phase charge pump conversion branch that are connected in parallel to each other; where a first terminal of the first-phase charge pump conversion branch and a first terminal of the second-phase charge pump conversion branch are respectively connected to an output terminal of the power input circuit, a second terminal of the first-phase charge pump conversion branch and a second terminal of the second-phase charge pump conversion branch are respectively connected to an input terminal of the power output circuit, the first-phase charge pump conversion branch and the second-phase charge pump conversion branch are respectively connected to the control circuit and are separately controlled by the control circuit, and the control circuit generates control signals of the first-phase charge pump conversion branch and the second-phase charge pump conversion branch based on feedback signals output by the converter. The technical solution disclosed in the present invention can provide higher voltage conversion efficiency and implement flexible operating mode switching.

## Description

### TECHNICAL FIELD

The present application relates to the technical field of DC-DC converters, and in particular, to a boost-buck DC-DC converter.

### BACKGROUND

A DC-DC converter is used to generate a regulated output that may be higher or lower than its input voltage. In the prior art, one type of DC-DC converter includes one inductor and four switches, but this type of DC-DC converter performs poorly in terms of switching noise and transient response in boosting mode.

In order to solve the above problem, it is proposed that a single-inductor boost converter be used to connect to another inductor-based buck converter, or that a capacitor-based charge pump be connected to an inductor-based buck converter. In the above two methods, a number of switches are disposed, thus limiting the conversion efficiency. Patent No. US8854019 discloses a hybrid circuit with a charge pump and a DC/DC converter to improve the efficiency of a boost-buck converter. In the technical solution, the charge pump needs to be always in an operating state; otherwise four switches driven by a capacitor will be out of control. In addition, the efficiency is low in the case of a low duty cycle. Further, voltage doublers at two phases cannot operate synchronously or as separate charge pumps, and flexibility is limited.

### SUMMARY

It is an object of the present invention to provide a concept that alleviates or solves the disadvantages and problems of conventional solutions.

Another object of the present invention is to provide a novel DC-DC converter for boosting-bucking applications in power supply systems.

According to a first aspect of the present invention, the above and other objects are achieved using a DC-DC converter. The DC-DC converter includes:
a power input circuit,
a power output circuit,
a control circuit, and
a first-phase charge pump conversion branch and a second-phase charge pump conversion branch that are connected in parallel to each other; where
a first terminal of the first-phase charge pump conversion branch and a first terminal of the second-phase charge pump conversion branch are respectively connected to an output terminal of the power input circuit, a second terminal of the first-phase charge pump conversion branch and a second terminal of the second-phase charge pump conversion branch are respectively connected to an input terminal of the power output circuit, the first-phase charge pump conversion branch and the second-phase charge pump conversion branch are respectively connected to the control circuit and are separately controlled by the control circuit, and the control circuit generates control signals of the first-phase charge pump conversion branch and the second-phase charge pump conversion branch based on feedback signals output by the converter.

With the DC-DC converter according to the embodiment of the present invention, the first-phase charge pump conversion branch and the second-phase charge pump conversion branch are controlled by the control circuit, so that the first-phase charge pump conversion branch and the second-phase charge pump conversion branch can operate at a same phase or at different phases, or can operate at one of two phases.

According to a first implementation of the first aspect of the present invention, the first-phase charge pump conversion branch includes a first capacitor, a first switch combination, and a second switch combination, where the first switch combination and the second switch combination are respectively connected to the first capacitor, and the first switch combination and the second switch combination are respectively connected to the control circuit and are separately controlled by the control circuit to implement switching between charging mode and discharging mode of the first capacitor; and
the second-phase charge pump conversion branch includes a second capacitor, a third switch combination, and a fourth switch combination, where the third switch combination and the fourth switch combination are respectively connected to the second capacitor, and the third switch combination and the fourth switch combination are respectively connected to the control circuit and are separately controlled by the control circuit to implement switching between charging mode and discharging mode of the second capacitor.

According to a second implementation of the first aspect of the present invention, the first switch combination includes a first switch and a fourth switch, and the second switch combination includes a second switch and a third switch, where a first terminal of the first switch and a first terminal of the third switch are respectively connected to the output terminal of the power input circuit, a second terminal of the first switch and a first terminal of the second switch are respectively connected to a first node, a second terminal of the third switch and a first terminal of the fourth switch are respectively connected to a second node, a second terminal of the second switch is connected to a fixed-voltage node, the first capacitor is disposed between the first node and the second node, and a third terminal of the first switch, a third terminal of the second switch, a third terminal of the third switch, and a third terminal of the fourth switch are respectively connected to the control circuit and are separately controlled by the control circuit; and
the third switch combination includes a fifth switch and an eighth switch, and the fourth switch combination includes a sixth switch and a seventh switch, where a first terminal of the fifth switch and a first terminal of the seventh switch are respectively connected to the output terminal of the power input circuit, a second terminal of the fifth switch and a first terminal of the sixth switch are respectively connected to a third node, a second terminal of the seventh switch and a first terminal of the eighth switch are respectively connected to a fourth node, a second terminal of the sixth switch is connected to the fixed-voltage node, the second capacitor is disposed between the third node and the fourth node, and a third terminal of the fifth switch, a third terminal of the sixth switch, a third terminal of the seventh switch, and a third terminal of the eighth switch are respectively connected to the control circuit and are separately controlled by the control circuit.

According to the first and second implementations of the first aspect of the present invention, the switches in the first switch combination and the second switch combination can be controlled by the control circuit, and the switches in the first switch combination and the second switch combination are controlled and driven by the control circuit instead of the first capacitor and the second capacitor. This solves the technical problem that the charge pump needs to be always in an operating state; otherwise the switches driven by the capacitor will be out of control.

According to a third implementation of the first aspect of the present invention, a second terminal of the fourth switch and a second terminal of the eighth switch are respectively connected to a fifth node.

According to a fourth implementation of the first aspect of the present invention, the fifth node is connected to the input terminal of the power output circuit.

According to the first aspect or any one of the implementations of the first aspect of the present invention, the power output circuit includes a ninth switch, an inductor, and a third capacitor, where a first terminal of the inductor is connected to the fifth node through the input terminal of the power output circuit, a second terminal of the inductor is connected to an output terminal of the power output circuit, a first terminal of the third capacitor is connected to a sixth node formed between the second terminal of the inductor and the output terminal of the power output circuit, a second terminal of the third capacitor is connected to the fixed-voltage node, a first terminal of the ninth switch is connected to the fifth node through the input terminal of the power output circuit, a second terminal of the ninth switch is connected to the fixed-voltage node, and a third terminal of the ninth switch is connected to the control circuit and is controlled by the control circuit.

According to the first aspect or any one of the implementations of the first aspect of the present invention, the control circuit includes a power conversion regulator and a driver controller that are connected in series with each other, where a first terminal of the power conversion regulator is connected to a seventh node formed between the sixth node and the output terminal of the power output circuit, and a second terminal of the power conversion regulator is connected to the driver controller.

According to a second aspect of the present invention, the above and other objects are achieved using another DC-DC converter, where the DC-DC converter includes two or more first-phase charge pump conversion branches and/or two or more second-phase charge pump conversion branches, and the two or more first-phase charge pump conversion branches and/or the two or more second-phase charge pump conversion branches are connected in parallel to each other.

For high power applications, a converter including two or more first-phase charge pump conversion branches and/or two or more second-phase charge pump conversion branches that are connected in parallel is preferred. In addition, the converter including two or more parallel first-phase charge pump conversion branches and/or two or more second-phase charge pump conversion branches that are connected in parallel can increase a multiple of the output voltage.

According to a first implementation of the second aspect of the present invention, first terminals of the two or more first-phase charge pump conversion branches and/or first terminals of the two or more second-phase charge pump conversion branches are respectively connected to an output terminal of a power input circuit, second terminals of the two or more first-phase charge pump conversion branches and/or second terminals of the two or more second-phase charge pump conversion branches are respectively connected to an input terminal of a power output circuit, the two or more first-phase charge pump conversion branches and/or the two or more second-phase charge pump conversion branches are respectively connected to a control circuit and are separately controlled by the control circuit, and the control circuit generates control signals of the two or more first-phase charge pump conversion branches and/or the two or more second-phase charge pump conversion branches based on feedback signals output by the converter.

According to a second implementation of the second aspect of the present invention, second terminals of fourth switches in the two or more first-phase charge pump conversion branches and/or second terminals of eighth switches in the two or more second-phase charge pump conversion branches are respectively connected to a fifth node.

According to a third implementation of the second aspect of the present invention, the fifth node is connected to the input terminal of the power output circuit.

According to the second aspect or any one of the implementations of the second aspect of the present invention, the power output circuit includes a ninth switch, an inductor, and a third capacitor, where a first terminal of the inductor is connected to the fifth node through the input terminal of the power output circuit, a second terminal of the inductor is connected to an output terminal of the power output circuit, a first terminal of the third capacitor is connected to a sixth node formed between the second terminal of the inductor and the output terminal of the power output circuit, a second terminal of the third capacitor is connected to a fixed-voltage node, a first terminal of the ninth switch is connected to the fifth node through the input terminal of the power output circuit, a second terminal of the ninth switch is connected to the fixed-voltage node, and a third terminal of the ninth switch is connected to the control circuit and is controlled by the control circuit.

According to the second aspect or any one of the implementations of the second aspect of the present invention, the control circuit includes a power conversion regulator and a driver controller that are connected in series with each other, where a first terminal of the power conversion regulator is connected to a seventh node formed between the sixth node and the output terminal of the power output circuit, and a second terminal of the power conversion regulator is connected to the driver controller.

It should be noted that more applications and advantages of the current DC-DC converter will be apparent from the following detailed description.

### BRIEF DESCRIPTION OF DRAWINGS

The accompanying drawings described herein are intended to provide a further understanding of the present application, and constitute a part of the present application. The illustrative embodiments of the present application and descriptions thereof are intended to describe the present application, and do not constitute improper limitations on the present application. In the accompanying drawings:
FIG. 1 is a circuit diagram of a DC-DC converter disclosed in the prior art;
FIG. 2 is a structural block diagram of a DC-DC converter according to an embodiment of the present invention;
FIG. 3 is a circuit diagram of a DC-DC converter according to an embodiment of the present invention;
FIG. 4 is a timing variation diagram of a two-phase pump according to an embodiment of the present invention;
FIG. 5 is a timing variation diagram of a single-phase pump according to an embodiment of the present invention;
FIG. 6 is a timing variation diagram in a bucking and heavy-load mode according to an embodiment of the present invention;
FIG. 7 is a timing variation diagram in a bucking and light-load mode according to an embodiment of the present invention; and
FIG. 8 is a circuit diagram of another DC-DC converter according to an embodiment of the present invention.

Reference signs: S1-first switch; S2-second switch; S3-third switch; S4-fourth switch; S5-fifth switch; S6-sixth switch; S7-seventh switch; S8-eighth switch; S9-ninth switch; S10-tenth switch; S11-eleventh switch; S12-twelfth switch; S13-thirteenth switch; 24-first capacitor; 34-second capacitor; 44-third capacitor; 54- fourth capacitor.

### DESCRIPTION OF EMBODIMENTS

To make the objects, technical solutions, and advantages of the present application clearer, the following clearly and completely describes the technical solutions of the present application with reference to specific embodiments and accompanying drawings of the present application. Apparently, the described embodiments are merely some rather than all of the embodiments of the present application. All other embodiments obtained by a person of ordinary skill in the art based on the embodiments of the present application without creative efforts shall fall within the protection scope of the present application.

It should be noted that in the specification, claims, and accompanying drawings of the present application, the terms "first", "second", and so on are intended to distinguish between similar objects, but do not necessarily indicate a specific order or sequence. It should be understood that the terms used in such a way are interchangeable in appropriate circumstances so that the embodiments of the present application described herein can be implemented in an order other than the order illustrated or described herein.

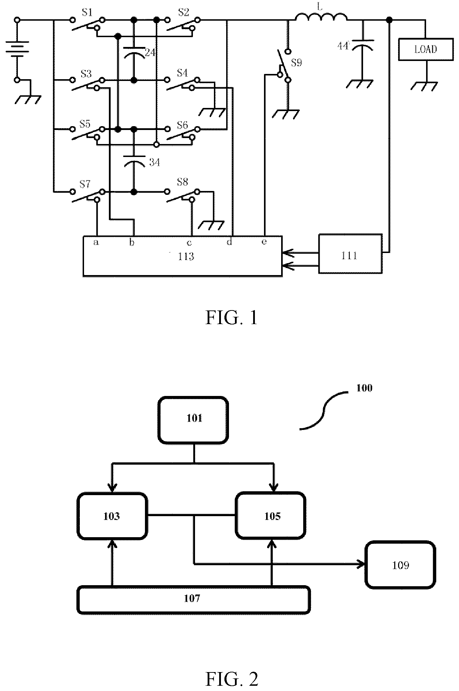

The technical solutions provided in the embodiments of the present application are described in detail below with reference to the accompanying drawings. FIG. 1 is a DC-DC converter disclosed in the prior art. In this DC-DC converter, a bucking conversion circuit is added; the bucking conversion circuit includes an inductor L; the inductor L is always connected to an input terminal of a power output circuit and an output terminal of the power output circuit; the boosting and bucking processes are implemented by adjusting timing between switches S1-S8 and a switch S9 in a charge pump; switches S3, S4, S7, S8, and S9 are controlled by a single switch controller 113, switches S1 and S2 are controlled by a corresponding second capacitor 34, and switches S5 and S6 are controlled by a corresponding first capacitor 24; switches S1-S8 and S9 are preferably MOS switches, switches S3, S4, S7, S8, and S9 are preferably driven by a driver, and switches S1, S2, S5, and S6 do not need to be driven by the driver, because a positive terminal of the first capacitor 24 and a positive terminal of the second capacitor 34 can reach a higher voltage to drive the switches. For example, switch S1 and switch S2 are driven by the voltage at the positive terminal of the second capacitor 34, and the driving voltage is transmitted through a corresponding jumper. Similarly, switch S5 and switch S6 are driven by the voltage at the positive terminal of the first capacitor 24, and the driving voltage is transmitted through a corresponding jumper.

In the technical solution disclosed in the prior art, among switches S1, S2, S3, S4, S5, S6, S7, S8, and S9, only switches S3, S4, S7, S8, and S9 are driven by the driver, and other switches S1, S2, S5, and S6 are directly driven by a flying capacitor. This special driving structure has the following limitation: The charge pump needs to be always in an operating state; otherwise, the four switches driven by the capacitor will be out of control. In the case of a low duty cycle, the efficiency is very low, because a voltage doubler in the charge pump needs to be always in an operating state even under a bucking condition in which an output voltage is less than an input voltage, but it is desirable that the voltage doubler should be turned off when boosting is not required. In this structure, two voltage doublers cannot operate synchronously or as separate charge pumps.

FIG. 2 illustrates a conversion circuit with higher circuit complexity and higher conversion efficiency compared with the DC-DC converter circuit of FIG. 1, that is, the converter circuit disclosed in the present invention.

As a first aspect of the present invention, FIG. 2 is a simplified block diagram of a DC-DC converter according to an embodiment of the present invention. Referring to FIG. 2, the DC-DC converter includes a power input circuit 101, a power output circuit 109, a control circuit 107, and a first-phase charge pump conversion branch 103 and a second-phase charge pump conversion branch 105 that are connected in parallel with each other. An input terminal of the power input circuit 101 is connected to a power supply to receive an input voltage, and an output terminal of the power input circuit 101 is connected to a first terminal of the first-phase charge pump conversion branch 103 and a first terminal of the second-phase charge pump conversion branch 105. An input terminal of the power output circuit 109 is connected to a second terminal of the first-phase charge pump conversion branch 103 and a second terminal of the second-phase charge pump conversion branch 105. The control circuit 107 is connected to the first-phase charge pump conversion branch 103 and the second-phase charge pump conversion branch 105, and the first-phase charge pump conversion branch 103 and the second-phase charge pump conversion branch 105 are separately controlled by the control circuit 107. The control circuit 107 is configured to output control signals to the first-phase charge pump conversion branch 103 and the second-phase charge pump conversion branch 105 according to received enable signals, so as to control switching between charging and discharging processes of the first-phase charge pump conversion branch 103 and the second-phase charge pump conversion branch 105, thereby completing adjustment of an output voltage.

One terminal of the power input circuit 101 is connected to the power supply, and the other terminal of the power input circuit 101 is connected to the first-phase charge pump conversion branch 103 and the second-phase charge pump conversion branch 105. The power input circuit 101 serves as input terminals of the first-phase charge pump conversion branch 103 and the second-phase charge pump conversion branch 105 for inputting a voltage to the entire DC-DC converter. The input terminal of the power output circuit 109 is connected to output terminals of the first-phase charge pump conversion branch 103 and the second-phase charge pump conversion branch 105 for outputting voltages output from the first-phase charge pump conversion branch 103 and the second-phase charge pump conversion branch 105.

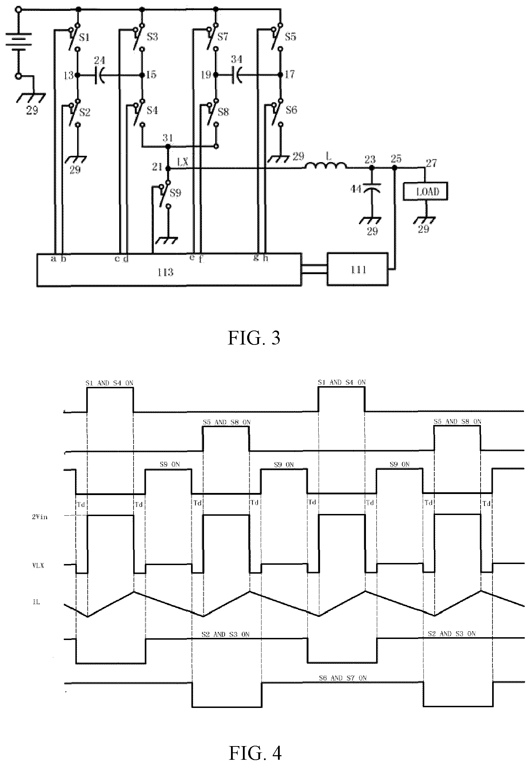

FIG. 3 shows a DC-DC converter having a first-phase charge pump conversion branch and a second-phase charge pump conversion branch according to an embodiment of the present invention. A possible implementation of the DC-DC converter is shown in FIG. 2.

FIG. 3 shows specific structures of the first-phase charge pump conversion branch 103 and the second-phase charge pump conversion branch 105 in the DC-DC converter. The first-phase charge pump conversion branch 103 and the second-phase charge pump conversion branch 105 are controlled by the control circuit 107 to complete switching between the charging and discharging processes, so as to complete adjustment of the output voltage. Under certain input and output conditions, for example, a target output voltage is slightly higher than an input voltage, if charge pumps at two phases can operate synchronously, the efficiency will be higher. Because the effective switching resistance will be reduced by 50%, two parallel paths can be formed. Under these conditions, it is not necessary to charge the capacitors at the expense of the next full cycle if there is sufficient time (when switch S9 is turned on) to fully charge them.

In FIG. 3, the first-phase charge pump conversion branch 103 and the second-phase charge pump conversion branch 105 each include a capacitor, and the capacitor can be used as an energy storage element to generate an output voltage greater than an input voltage or to generate a negative output voltage. In this embodiment, two first-phase charge pump conversion branches 103 and two second-phase charge pump conversion branches 105 are disposed so that the maximum output voltage of the DC-DC converter is twice the input voltage.

The structural composition of the first-phase charge pump conversion branch 103 is the same as that of the second-phase charge pump conversion branch 105. The first-phase charge pump conversion branch 103 includes a first capacitor 24, a first switch combination, and a second switch combination. The first switch combination and the second switch combination are respectively connected to the first capacitor 24; and the first switch combination and the second switch combination are respectively connected to the control circuit 107 and are separately controlled by the control circuit 107 to implement switching between charging mode and discharging mode of the first capacitor 24. Switches in the first switch combination and the second switch combination are controlled by enable pulse signals input by the control circuit 107, to implement switching between charging mode and discharging mode of the first capacitor 24.

The second-phase charge pump conversion branch 105 includes a second capacitor 34, a third switch combination, and a fourth switch combination. The third switch combination and the fourth switch combination are respectively connected to the second capacitor 34; and the third switch combination and the fourth switch combination are respectively connected to the control circuit 107 and are separately controlled by the control circuit 107 to implement switching between charging mode and discharging mode of the second capacitor 34. Switches in the third switch combination and the fourth switch combination are controlled by enable pulse signals input by the control circuit 107, to implement switching between charging mode and discharging mode of the second capacitor 34.

The first-phase charge pump conversion branch 103, which is formed by the first switch combination, the second switch combination, and the first capacitor 24; and the second-phase charge pump conversion branch 105, which is formed by the third switch combination, the fourth switch combination, and the second capacitor 34 are separately controlled by the control circuit 107, so that the first switch combination, the second switch combination, the third switch combination, and the fourth switch combination can operate independently. Thus, the first-phase charge pump conversion branch 103 and the second-phase charge pump conversion branch 105 can operate alternately or simultaneously. Therefore, under certain input and output conditions, for example, when a target output voltage is slightly higher than an input voltage, if two charge pumps can operate synchronously, the efficiency is higher, because the effective switching resistance will be reduced by 50%, and two parallel paths are formed. Under these conditions, it is not necessary to charge the capacitors at the expense of the next full cycle if there is sufficient time (when switch S9 is turned on) to fully charge them.

In this embodiment, the first switch combination includes first switch S1 and fourth switch S4, and the second switch combination includes second switch S2 and third switch S3. A first terminal of first switch S1 and a first terminal of third switch S3 are respectively connected to the output terminal of the power input circuit 101, so that a voltage can be input to circuits connected to the switches. A second terminal of first switch S1 and a first terminal of second switch S2 are respectively connected to a first node 13, where the first node 13 is disposed between the second terminal of first switch S1 and the first terminal of second switch S2. A second terminal of third switch S3 and a first terminal of fourth switch S4 are respectively connected to a second node 15, where the second node 15 is disposed between the second terminal of third switch S3 and the first terminal of fourth switch S4. A second terminal of second switch S2 is connected to a fixed-voltage node 29, where the fixed-voltage node 29 is used for ground shorting. The first capacitor 24 is disposed between the first node 13 and the second node 15, and the first capacitor 24 transmits the voltage through a jumper on which the first node 13 is located and a jumper on which the second node 15 is located. A third terminal of first switch S1, a third terminal of second switch S2, a third terminal of third switch S3, and a third terminal of fourth switch S4 are respectively connected to the control circuit 107 and are separately controlled by the control circuit 107.

The third switch combination includes fifth switch S5 and eighth switch S8, and the fourth switch combination includes sixth switch S6 and seventh switch S7. A first terminal of fifth switch S5 and a first terminal of seventh switch S7 are respectively connected to the output terminal of the power input circuit 101, so that a voltage can be input to circuits connected to the switches. A second terminal of fifth switch S5 and a first terminal of sixth switch S6 are respectively connected to a third node 17, where the third node 17 is disposed between the second terminal of fifth switch S5 and the first terminal of sixth switch S6. A second terminal of seventh switch S7 and a first terminal of eighth switch S8 are respectively connected to a fourth node 19, where the fourth node 19 is disposed between the second terminal of seventh switch S7 and the first terminal of eighth switch S8. A second terminal of sixth switch S6 is connected to the fixed-voltage node 29, where the fixed-voltage node 29 is used for ground shorting. The second capacitor 34 is disposed between the third node 17 and the fourth node 19, and the second capacitor 34 transmits the voltage through a jumper on which the third node 17 is located and a jumper on which the fourth node 19 is located. A third terminal of fifth switch S5, a third terminal of sixth switch S6, a third terminal of seventh switch S7, and a third terminal of eighth switch S8 are respectively connected to the control circuit 107 and are separately controlled by the control circuit 107.

In FIG. 3, a, b, c, d, e, f, g, and h respectively represent timing control signals that are generated by the control circuit 107 for switches S1-S9 based on feedback signals output by the converter.

In the embodiment of the present invention, positive and negative electrodes of the first capacitor 24 and the second capacitor 34 may or may not be distinguished. An example in which the positive and negative electrodes of the first capacitor 24 and the second capacitor 34 are not distinguished is used herein to illustrate the embodiment of the present invention. The first capacitor 24 is disposed between the first node 13 and the second node 15. First switch S1 and second switch S2 are controlled by the control circuit 107, and the first node 13 performs switching between the power input circuit 101 and the fixed-voltage node 29. Third switch S3 and fourth switch S4 are controlled by the control circuit 107, and the second node 15 performs switching between the power input circuit 101 and the power output circuit 109. The second capacitor 34 is disposed between the third node 17 and the fourth node 19. Fifth switch S5 and sixth switch S6 are controlled by the control circuit 107, and the third node 17 performs switching between the power input circuit 101 and the fixed-voltage node 29. Seventh switch S7 and eighth switch S8 are controlled by the control circuit 107, and the fourth node 19 performs switching between the power input circuit 101 and the power output circuit 109. In the embodiment of the present invention, when the first capacitor 24 transfers charges to a load, the second capacitor 34 can be recharged, and vice versa. Through simultaneous charging and pumping, the first capacitor 24 and the second capacitor 34 are constantly maintained at a stable voltage close to twice the voltage of the power supply.

Switches S1-S9 may be N-type or P-type MOS switches. In the embodiment of the present invention, switches S2, S6, and S9 are N-type MOS switches with a smaller area, which is more advantageous for the same on-resistance state. Based on different drive circuit designs, switches S1, S3, S4, S5, S7, and S8 may be N-type or P-type MOS switches. The technical solution disclosed in the embodiment of the present invention differs from the structure in the prior art as follows: The structure in the prior art supports only a single operating mode, while the structure disclosed in the present invention can implement a plurality of operating modes through switch-based regulation.

Third switch S3 and seventh switch S7 are controlled by the control circuit 107 to selectively connect a first terminal of the first capacitor 24 and/or a first terminal of the second capacitor 34 to the output terminal of the power input circuit 101. Second switch S2 and sixth switch S6 are controlled by the control circuit 107 to selectively connect a second terminal of the first capacitor 24 and/or a second terminal of the second capacitor 34 to the fixed-voltage node 29. During the charging stage for the first capacitor 24 and/or the second capacitor 34, first switch S1 and fourth switch S4 in the first-phase charge pump conversion branch 103 are turned off, and third switch S3 and second switch S2 in the first-phase charge pump conversion branch 103 are turned on to connect the first terminal of the first capacitor 24 to the output terminal of the power input circuit 101 and connect the second terminal of the first capacitor 24 to the fixed-voltage node 29, and/or fifth switch S5 and eighth switch S8 in the second-phase charge pump conversion branch 105 are turned off, and seventh switch S7 and sixth switch S6 in the second-phase charge pump conversion branch 105 are turned on to connect the first terminal of the second capacitor 34 to the output terminal of the power input circuit 101 and connect the second terminal of the second capacitor 34 to the fixed-voltage node 29.In the embodiment of the present invention, the first capacitor 24 and the second capacitor 34 can be charged simultaneously or separately. If the charging time of the first capacitor 24 and/or the second capacitor 34 is long enough, the charging voltage of the first capacitor 24 and/or the second capacitor 34 can reach the voltage level of the power supply.

At the discharging stage, first switch S1 and fourth switch S4 in the first-phase charge pump conversion branch 103 are turned on, and second switch S2 and third switch S3 in the first-phase charge pump conversion branch 103 are turned off to connect the first terminal of the first capacitor 24 to the input terminal of the power output circuit 109 and connect the second terminal of the first capacitor 24 to the output terminal of the power input circuit 101; and fifth switch S5 and eighth switch S8 in the second-phase charge pump conversion branch 105 are turned on, and sixth switch S6 and seventh switch S7 are turned off to connect the first terminal of the second capacitor 34 to the input terminal of the power output circuit 109 and connect the second terminal of the second capacitor 34 to the output terminal of the power input circuit 101. At the discharging stage, the fully charged first capacitor 24 and/or the fully charged second capacitor 34 are respectively connected in series with the power supply to supply the load with an initial voltage higher than the voltage of the power supply; and in order to limit the amount of the pulsating voltage in the output voltage, a relatively small amount of charge is converted, and the control circuit 107 switches the first capacitor 24 and/or the second capacitor 34 back to the charging stage. In order to satisfy the need for the DC-DC converter to convert the charge to the load, the control circuit performs switching according to the above process.

It can be seen from the above control process that switches S1-S9 in the DC-DC converter according to the embodiment of the present invention are directly controlled and driven by the control circuit 107, and no switch is directly driven by the first capacitor 24 and/or the second capacitor 34. According to the technical solution disclosed in the present invention, the charge pump does not need to be always in an operating state, and the efficiency is improved when the duty cycle is low, because the voltage doubler in the charge pump does not need to be always in an operating state even under a bucking condition in which the output voltage is less than the input voltage. In the embodiment of the present invention, the first-phase charge pump conversion branch and the second-phase charge pump conversion branch can operate synchronously or separately; in other words, the first-phase charge pump conversion branch and the second-phase charge pump conversion branch are two voltage doublers.

As an embodiment of the present invention, if the positive and negative electrodes of the first capacitor 24 and the second capacitor 34 are distinguished, the second node 15 between the second terminal of third switch S3 and the first terminal of fourth switch S4 is connected to the positive terminal of the first capacitor 24, the first node 13 disposed between the second terminal of first switch S1 and the first terminal of second switch S2 is connected to the negative terminal of the first capacitor 24, the third node 17 disposed between the second terminal of fifth switch S5 and the first terminal of sixth switch S6 is connected to the negative terminal of the second capacitor 34, and the fourth node 19 disposed between the second terminal of seventh switch S7 and the first terminal of eighth switch S8 is connected to the positive terminal of the second capacitor 34.

As an embodiment of the present invention, a second terminal of fourth switch S4 in the first-phase charge pump conversion branch 103 and a second terminal of eighth switch S8 in the second-phase charge pump conversion branch 105 are respectively connected to a fifth node 31, where the fifth node 31 is disposed between the second terminal of fourth switch S4 in the first-phase charge pump conversion branch 103 and the second terminal of eighth switch S8 in the second-phase charge pump conversion branch 105; and the first-phase charge pump conversion branch 103 and the second-phase charge pump conversion branch 105 transmit the voltage to the power output circuit 109 through a jumper on which the fifth node 31 is located, that is, the fifth node 31 is connected to the input terminal of the power output circuit 109.

As an embodiment of the present invention, the power output circuit 109 includes ninth switch S9, an inductor L, and a third capacitor 44. A first terminal of the inductor L is connected to the fifth node 31 through the input terminal 21 of the power output circuit, and a second terminal of the inductor L is connected to the output terminal 27 of the power output circuit. A first terminal of the third capacitor 44 is connected to a sixth node 23 formed between the second terminal of the inductor L and the output terminal 27 of the power output circuit, and a second terminal of the third capacitor 44 is connected to the fixed-voltage node 29. A first terminal of ninth switch S9 is connected to the fifth node 31 through the input terminal 21 of the power output circuit, a second terminal of ninth switch S9 is connected to the fixed-voltage node 29, and a third terminal of ninth switch S9 is connected to the control circuit 107 and is controlled by the control circuit 107 to cooperate with the switches in the charge pump by turning on or off ninth switch S9, so as to achieve the bucking effect. Under the control of the control circuit 107, ninth switch S9 is turned on to connect the input terminal 21 of the power output circuit to the fixed-voltage node 29, and ninth switch S9 is turned on or off by the control circuit 107 to cooperate with the first-phase charge pump conversion branch 103 and/or the second-phase charge pump conversion branch 105 to achieve the bucking effect. The inductor L and the third capacitor 44 serve as a low-pass filter to transfer the converted voltage to the load, where the magnitude of the pulsating voltage in the output voltage mainly depends on the inductance of the inductor L and the capacitance of the third capacitor 44.

In summary, the power output circuit 109 includes a rectifying and filtering section and a freewheel switch, where the freewheel switch and the charge pump cooperate, so that the entire converter can achieve the purposes of boosting and bucking.

As an embodiment of the present invention, the control circuit 107 includes a power conversion regulator 111 and a driver controller 113 that are connected in series with each other, where a first terminal of the power conversion regulator 111 is connected to a seventh node 25 formed between the sixth node 23 and the output terminal 27 of the power output circuit, and a second terminal of the power conversion regulator 111 is connected to the driver controller 113. In the embodiment disclosed in the present invention, when the output voltage needs to be adjusted, a voltage signal to be output is obtained through the power conversion regulator 111, and then transmitted to the driver controller 113, and a control signal is output to the first-phase charge pump conversion branch 103 and the second-phase charge pump conversion branch 105 by the driver controller 113 based on a received enable signal, thereby separately controlling the first switch combination, the second switch combination, the third switch combination, and the fourth switch combination to output a desired voltage to the load.

The DC-DC converter disclosed in the present invention can support a plurality of operating modes through switch-based regulation, as shown in the figure below.

FIG. 4 shows a switching timing diagram of a two-phase pump at different stages according to the present invention. As shown in FIG. 4, the timing diagram points to one period. At the discharging stage of the period, the control circuit sends a switching timing signal to drive the first switch combination and the third switch combination to be alternately switched in two clock cycles. Similar to the prior art, the first-phase charge pump conversion branch 103 and the second-phase charge pump conversion branch 105 alternately operate, and the control circuit 107 sends a switching timing signal to drive the first switch combination or the third switch combination so that the first capacitor 24 and the second capacitor 34 are alternately discharged, the charge is transferred to the input terminal 21 of the power output circuit, and the first capacitor 24 or the second capacitor 34 is connected in series with a battery power supply. In this case, an output voltage that is twice the input voltage can be output. When the first switch combination and the third switch combination are switched, the state of ninth switch S9 is inconsistent with the states of the switches in the first switch combination and the third switch combination. VLX is the voltage input to the power output circuit 109. The current IL of the inductor L changes with the alternating switching of the first-phase charge pump conversion branch 103 and the second-phase charge pump conversion branch 105. FIG. 4 shows a switching timing diagram of the two-phase pump at different stages when first switch S1 and fourth switch S4 or fifth switch S5 and eighth switch S8 are turned on or off simultaneously. However, it is not necessary to turn on or off first switch S1 and fourth switch S4 or fifth switch S5 and eighth switch S8 completely simultaneously, and there is a delay Td between gating signals, but this does not affect the operation.

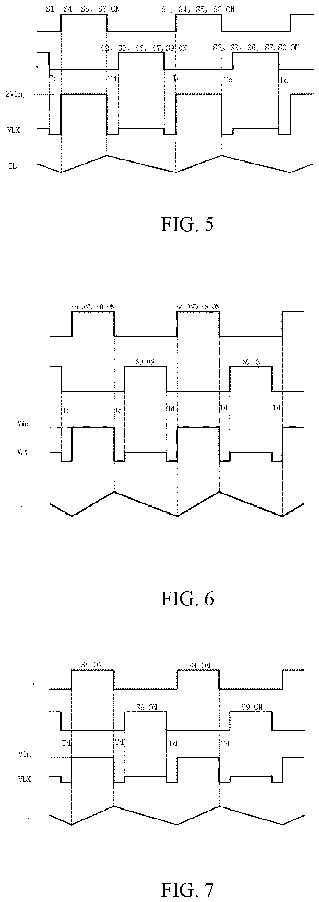

FIG. 5 shows a switching timing diagram of a single-phase pump at different stages disclosed in the present invention. As shown in FIG. 5, the timing diagram points to one period. At the discharging stage of the period, the control circuit sends a switching timing signal to drive the first switch combination and the third switch combination to switch simultaneously in two clock cycles. Unlike the prior art, the first-phase charge pump conversion branch 103 and the second-phase charge pump conversion branch 105 operate simultaneously. The control circuit 107 sends a switching timing signal to drive the first switch combination and the third switch combination, so that the first capacitor 24 and the second capacitor 34 are discharged at the same time. The charge is transmitted to the input terminal 21 of the power output circuit. The first capacitor 24 and the second capacitor 34 are respectively connected in series with the battery power supply. In this case, the output voltage that is twice the input voltage can be output. The current IL of the inductor L changes with the simultaneous switching of the first-phase charge pump conversion branch 103 and the second-phase charge pump conversion branch 105. FIG. 5 shows a switching timing diagram of the single-phase pump at different stages when first switch S1 and fourth switch S4 and fifth switch S5 and eighth switch S8 are turned on or off at the same time. However, it is not necessary to turn on or off first switch S1 and fourth switch S4 completely simultaneously with fifth switch S5 and eighth switch S8, and there is a delay Td between gating signals, but this does not affect the operation. In FIG. 5, the state of ninth switch S9 is the same as the states of second switch S2, third switch S3, sixth switch S6, and seventh switch S7. When the converter of the present invention is in a high duty cycle, if the output voltage is high, more charges enter and exit the first capacitor 24 and the second capacitor 34. As a result, when the converter of the present invention is operating at a low duty cycle, less current flows through the load, or the switch drive is reconfigured to allow a higher load current or charge to be delivered at a low output voltage.

FIG. 6 is a timing diagram when the converter operates in the bucking and heavy-load mode according to the present invention. In the embodiment of the present invention, the converter is in the bucking and heavy-load mode, and the voltage doubler is turned off; first switch S1, second switch S2, third switch S3, fifth switch S5, sixth switch S6, and seventh switch S7 stop switching, that is, third switch S3, seventh switch S7, second switch S2, and sixth switch S6 are statically on, first switch S1 and fifth switch S5 are statically off. One of third switch S3 and fourth switch S4 is statically on, for example, third switch S3 is statically on, and fourth switch S4 is switched. Similarly, one of seventh switch S7 and eighth switch S8 is statically on, for example, seventh switch S7 is statically on, and eighth switch S8 is switched. The switches operating at two phases may be driven in parallel to implement simultaneous switching, so as to improve efficiency. In the embodiment of the present invention, when the converter is in the bucking and heavy-load mode, as shown in FIG. 6, fourth switch S4 and eighth switch S8 are switched, third switch S3 and seventh switch S7 are statically on, and the state of ninth switch S9 is inconsistent with the states of fourth switch S4 and eighth switch S8. The above description is only an example. It is also possible that fourth switch S4 and eighth switch S8 are statically on, third switch S3 and seventh switch S7 are switched, and the state of ninth switch S9 is inconsistent with the states of third switch S3 and seventh switch S7. In this case, first switch S1 and fifth switch S5 are statically off, and second switch S2 and sixth switch S6 can be turned on to charge the first capacitor 24 and the second capacitor 34, but this is absolutely not necessary.

FIG. 7 is a timing diagram when the converter operates in the bucking and light-load mode according to the present invention. In the embodiment of the present invention, the converter is in the bucking and light-load mode, and the voltage doubler is turned off; first switch S1, second switch S2, third switch S3, fifth switch S5, sixth switch S6, seventh switch S7, and eighth switch S8 stop switching, that is, third switch S3, seventh switch S7, second switch S2, and sixth switch S6 are statically on, and first switch S1, fifth switch S5, and eighth switch S8 are statically off. When the converter of the embodiment of the present invention is in the bucking and light-load mode, one of third switch S3 and fourth switch S4 is statically on, and during a certain period of time, only one of third switch S3, fourth switch S4, seventh switch S7, and eighth switch S8 is switched as a switch of the buck converter, and the other switches are statically on or off to implement voltage output of the converter in the bucking and light-load mode. For example, fourth switch S4 is selected for switching. When fourth switch S4 is switched, third switch S3 is statically on, and one or both of seventh switch S7 and eighth switch S8 may be statically on. In addition, in this example, first switch S1 and fifth switch S5 are turned on, second switch S2 and sixth switch S6 are turned off, and the first capacitor 24 and the second capacitor 34 can be fully charged, but charging is not necessary.

In the bucking and light-load mode, large-area switches may also be segmented to further reduce switching losses. In FIG. 7, only a part of fourth switch S4 is used for switching, while the remaining part of fourth switch S4 is statically on. This can be achieved by performing segment-based drive control on fourth switch S4.

The selection of an operating mode depends on the input voltage Vin, the voltage target value and the light load condition of the output voltage Vout, and the efficiency in different modes, and the efficiency of the two-phase pump is higher when a high voltage Vout is output, for example, the Vout voltage is close to twice the voltage of the input voltage Vin at the time of heavy load. In the case of Vin < Vout<< 2Vin under heavy load, the single-phase pump is more efficient. Alternatively, in the case of Vout < Vin, when the voltage doubler is turned off, the efficiency is higher when only the bucking mode is enabled. In the bucking mode, only one phase needs to be switched under the light load condition, while two phases can be connected in parallel under heavy load to improve efficiency.

According to the technical solution disclosed in the present invention, all the switches are controlled by a master controller, so that the charge pump does not need to be always in an operating state, and the efficiency is greatly improved in the case of a low duty cycle. The two voltage doublers can synchronously operate or operate as separate charge pumps, thereby improving the voltage conversion efficiency.

As a second aspect of the present invention, another structure of the DC-DC converter is also disclosed, where the structure of the DC-DC converter includes two or more first-phase charge pump conversion branches 103 and/or two or more second-phase charge pump conversion branches 105 according to any one of the previous embodiments, and the two or more first-phase charge pump conversion branches 103 and/or the two or more second-phase charge pump conversion branches 105 are connected in parallel with each other.

First terminals of the two or more first-phase charge pump conversion branches 103 and first terminals of the two or more second-phase charge pump conversion branches 105 are respectively connected to an output terminal of a power input circuit 101, second terminals of the two or more first-phase charge pump conversion branches 103 and/or second terminals of the two or more second-phase charge pump conversion branches 105 are respectively connected to an input terminal 21 of a power output circuit, the two or more first-phase charge pump conversion branches 103 and/or the two or more second-phase charge pump conversion branches 105 are respectively connected to a control circuit 107 and are separately controlled by the control circuit, and the control circuit is used for outputting control signals to the two or more first-phase charge pump conversion branches 103 and/or the two or more second-phase charge pump conversion branches 105 according to received enable signals.

Second terminals of switches S4 in the two or more first-phase charge pump conversion branches 103 and/or second terminals of switches S8 in the two or more second-phase charge pump conversion branches 105 are respectively connected to a fifth node 31.

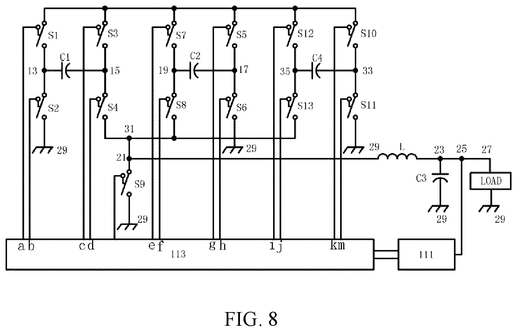

As shown in FIG. 8, one second-phase charge pump conversion branch 105 is added to the DC-DC converter, where the second-phase charge pump conversion branch 105 includes a fourth capacitor 54, a fifth switch combination, and a sixth switch combination. The fifth switch combination and the sixth switch combination are respectively connected to the fourth capacitor 54. The fifth switch combination and the sixth switch combination are respectively connected to the control circuit 107 and are separately controlled by the control circuit 107 to implement switching between the charging mode and the discharging mode of the fourth capacitor 54. The fifth switch combination and the sixth switch combination generate a control signal for the added second-phase charge pump conversion branch 105 through the control circuit 107 based on a feedback signal output by the converter, so as to implement switching between the charging mode and the discharging mode of the fourth capacitor 54.

The fifth switch combination includes tenth switch S10 and thirteenth switch S13, and the sixth switch combination includes twelfth switch S12 and eleventh switch S11. A first terminal of tenth switch S10 and a first terminal of twelfth switch S12 are connected to the output terminal of the power input circuit 101 to input voltages. A second terminal of tenth switch S10 and a first terminal of eleventh switch S11 are respectively connected to an eighth node 33, where the eighth node 33 is disposed between the second terminal of tenth switch S10 and the first terminal of eleventh switch S11. A second terminal of twelfth switch S12 and a first terminal of thirteenth switch S13 are respectively connected to a ninth node 35, where the ninth node 35 is disposed between the second terminal of twelfth switch S12 and the first terminal of thirteenth switch S13. A second terminal of eleventh switch S11 is connected to a fixed-voltage node 29, where the fixed-voltage node 29 is used for ground shorting. The fourth capacitor 54 is disposed between the eighth node 33 and the ninth node 35, and the fourth capacitor 54 transmits voltages through a jumper on which the eighth node 33 is located and a jumper on which the ninth node 35 is located. A third terminal of tenth switch S10, a third terminal of eleventh switch S11, a third terminal of twelfth switch S12, and a third terminal of thirteenth switch S13 are respectively connected to the control circuit 107 and are separately controlled by the control circuit 107. A second terminal of thirteenth switch S13 is connected to the fifth node 31. The fifth node 31 is connected to the input terminal 21 of the power output circuit.

In FIG. 8, a, b, c, d, e, f, g, h, i, j, k, and m respectively represent timing control signals that are generated by the control circuit 107 for switches S1-S13 based on feedback signals output by the converter.

The power output circuit 109 includes ninth switch S9, an inductor L, and a third capacitor 44. A first terminal of the inductor L is connected to the fifth node 31 through the input terminal 21 of the power output circuit, and a second terminal of the inductor L is connected to an output terminal 27 of the power output circuit. A first terminal of the third capacitor 44 is connected to a sixth node 23 formed between the second terminal of the inductor L and the output terminal 27 of the power output circuit, and a second terminal of the third capacitor 44 is connected to the fixed-voltage node 29. A first terminal of ninth switch S9 is connected to the fifth node 31 through the input terminal 21 of the power output circuit, a second terminal of ninth switch S9 is connected to the fixed-voltage node 29, and a third terminal of ninth switch S9 is connected to the control circuit 107 and is controlled by the control circuit 107 to cooperate with the switches in the charge pump by turning on or off ninth switch S9, so as to achieve the bucking effect. Under the control of the control circuit 107, ninth switch S9 is turned on to connect the input terminal 21 of the power output circuit to the fixed-voltage node 29, and ninth switch S9 is turned on or off by the control circuit 107 to cooperate with the first-phase charge pump conversion branch 103 and/or the second-phase charge pump conversion branch 105 to achieve the bucking effect. The inductor L and the third capacitor 44 serve as a low-pass filter to transfer the converted voltage to a load, where the magnitude of the pulsating voltage in the output voltage mainly depends on the inductance of the inductor L and the capacitance of the third capacitor 44.

In summary, the power output circuit 109 includes a rectifying and filtering section and a freewheel switch, where the freewheel switch and the charge pump cooperate, so that the entire converter can achieve the purposes of boosting and bucking.

The control circuit 107 includes a power conversion regulator 111 and a driver controller 113 that are connected in series with each other, where a first terminal of the power conversion regulator 111 is connected to a seventh node 25 formed between the sixth node 23 and the output terminal 27 of the power output circuit, and a second terminal of the power conversion regulator 111 is connected to the driver controller 113. In the embodiment disclosed in the present invention, when the output voltage needs to be adjusted, a voltage signal to be output is obtained through the power conversion regulator 111, and then transmitted to the driver controller 113, and a control signal is output to the first-phase charge pump conversion branch 103 and the second-phase charge pump conversion branch 105 by the driver controller 113 based on a received enable signal, thereby separately controlling the first switch combination, the second switch combination, the third switch combination, and the fourth switch combination to output a desired voltage to the load.

The specific operating principle of the embodiment shown in FIG. 8 is the same as that of the first aspect, and therefore is not described herein again.

According to the technical solution disclosed in the present invention, all the switches are controlled by a master controller, so that the charge pump does not need to be always in an operating state, and the efficiency is greatly improved in the case of a low duty cycle. A plurality of voltage doublers can synchronously operate or operate as separate charge pumps, thereby improving the voltage conversion efficiency.

The above descriptions are merely embodiments of the present application and are not intended to limit the present application. A person skilled in the art can make various modifications and changes to the present application. Any modifications, equivalent replacements, improvements, etc. made within the principle of the present application shall fall within the protection scope of the claims of the present application.

## Claims

1. A DC-DC converter, comprising:
a power input circuit,
a power output circuit,
a control circuit, and
a first-phase charge pump conversion branch and a second-phase charge pump conversion branch that are connected in parallel to each other; wherein a first terminal of the first-phase charge pump conversion branch and a first terminal of the second-phase charge pump conversion branch are respectively connected to an output terminal of the power input circuit, a second terminal of the first-phase charge pump conversion branch and a second terminal of the second-phase charge pump conversion branch are respectively connected to an input terminal of the power output circuit, the first-phase charge pump conversion branch and the second-phase charge pump conversion branch are respectively connected to the control circuit and are separately controlled by the control circuit, and the control circuit generates control signals of the first-phase charge pump conversion branch and the second-phase charge pump conversion branch based on feedback signals output by the converter.

2. The DC-DC converter according to claim 1, wherein the first-phase charge pump conversion branch comprises a first capacitor, a first switch combination, and a second switch combination, wherein the first switch combination and the second switch combination are respectively connected to the first capacitor, and the first switch combination and the second switch combination are respectively connected to the control circuit and are separately controlled by the control circuit to implement switching between charging mode and discharging mode of the first capacitor; and
the second-phase charge pump conversion branch comprises a second capacitor, a third switch combination, and a fourth switch combination, wherein the third switch combination and the fourth switch combination are respectively connected to the second capacitor, and the third switch combination and the fourth switch combination are respectively connected to the control circuit and are separately controlled by the control circuit to implement switching between charging mode and discharging mode of the second capacitor.

3. The DC-DC converter according to claim 2, wherein
the first switch combination comprises a first switch and a fourth switch, and the second switch combination comprises a second switch and a third switch, wherein a first terminal of the first switch and a first terminal of the third switch are respectively connected to the output terminal of the power input circuit, a second terminal of the first switch and a first terminal of the second switch are respectively connected to a first node, a second terminal of the third switch and a first terminal of the fourth switch are respectively connected to a second node, a second terminal of the second switch is connected to a fixed-voltage node, the first capacitor is disposed between the first node and the second node, and a third terminal of the first switch, a third terminal of the second switch, a third terminal of the third switch, and a third terminal of the fourth switch are respectively connected to the control circuit and are separately controlled by the control circuit; and
the third switch combination comprises a fifth switch and an eighth switch, and the fourth switch combination comprises a sixth switch and a seventh switch, wherein a first terminal of the fifth switch and a first terminal of the seventh switch are respectively connected to the output terminal of the power input circuit, a second terminal of the fifth switch and a first terminal of the sixth switch are respectively connected to a third node, a second terminal of the seventh switch and a first terminal of the eighth switch are respectively connected to a fourth node, a second terminal of the sixth switch is connected to the fixed-voltage node, the second capacitor is disposed between the third node and the fourth node, and a third terminal of the fifth switch, a third terminal of the sixth switch, a third terminal of the seventh switch, and a third terminal of the eighth switch are respectively connected to the control circuit and are separately controlled by the control circuit.

4. The DC-DC converter according to claim 3, wherein a second terminal of the fourth switch and a second terminal of the eighth switch are respectively connected to a fifth node.

5. The DC-DC converter according to claim 4, wherein the fifth node is connected to the input terminal of the power output circuit.

6. The DC-DC converter according to any one of claims 1 to 5, wherein the power output circuit comprises a ninth switch, an inductor, and a third capacitor, wherein a first terminal of the inductor is connected to the fifth node through the input terminal of the power output circuit, a second terminal of the inductor is connected to an output terminal of the power output circuit, a first terminal of the third capacitor is connected to a sixth node formed between the second terminal of the inductor and the output terminal of the power output circuit, a second terminal of the third capacitor is connected to the fixed-voltage node, a first terminal of the ninth switch is connected to the fifth node through the input terminal of the power output circuit, a second terminal of the ninth switch is connected to the fixed-voltage node, and a third terminal of the ninth switch is connected to the control circuit and is controlled by the control circuit.

7. The DC-DC converter according to claim 6, wherein the control circuit comprises a power conversion regulator and a driver controller that are connected in series with each other, wherein a first terminal of the power conversion regulator is connected to a seventh node formed between the sixth node and the output terminal of the power output circuit, and a second terminal of the power conversion regulator is connected to the driver controller.

8. A DC-DC converter, comprising two or more first-phase charge pump conversion branches and/or two or more second-phase charge pump conversion branches according to any one of the preceding claims, wherein the two or more first-phase charge pump conversion branches and/or the two or more second-phase charge pump conversion branches are connected in parallel to each other.

9. The DC-DC converter according to claim 8, wherein first terminals of the two or more first-phase charge pump conversion branches and first terminals of the two or more second-phase charge pump conversion branches are respectively connected to an output terminal of a power input circuit, second terminals of the two or more first-phase charge pump conversion branches and/or second terminals of the second-phase charge pump conversion branches are respectively connected to an input terminal of a power output circuit, the two or more first-phase charge pump conversion branches and/or the two or more second-phase charge pump conversion branches are respectively connected to a control circuit and are separately controlled by the control circuit, and the control circuit generates control signals of the two or more first-phase charge pump conversion branches and/or the two or more second-phase charge pump conversion branches based on feedback signals output by the converter.

10. The DC-DC converter according to claim 9, wherein second terminals of fourth switches in the two or more first-phase charge pump conversion branches and/or second terminals of eighth switches in the two or more second-phase charge pump conversion branches are respectively connected to a fifth node.

11. The DC-DC converter according to claim 10, wherein the fifth node is connected to the input terminal of the power output circuit.

12. The DC-DC converter according to any one of claims 9 to 11, wherein the power output circuit comprises a ninth switch, an inductor, and a third capacitor, wherein a first terminal of the inductor is connected to the fifth node through the input terminal of the power output circuit, a second terminal of the inductor is connected to an output terminal of the power output circuit, a first terminal of the third capacitor is connected to a sixth node formed between the second terminal of the inductor and the output terminal of the power output circuit, a second terminal of the third capacitor is connected to a fixed-voltage node, a first terminal of the ninth switch is connected to the fifth node through the input terminal of the power output circuit, a second terminal of the ninth switch is connected to the fixed-voltage node, and a third terminal of the ninth switch is connected to the control circuit and is controlled by the control circuit.

13. The DC-DC converter according to any one of claims 9 to 11, wherein the control circuit comprises a power conversion regulator and a driver controller that are connected in series with each other, wherein a first terminal of the power conversion regulator is connected to a seventh node formed between the sixth node and the output terminal of the power output circuit, and a second terminal of the power conversion regulator is connected to the driver controller.
